# EUROPÄISCHE PATENTSCHRIFT

(11) **EP 4 119 493 B1**
(45) Veröffentlichungstag und Bekanntmachung des Hinweises auf die Patenterteilung: **23.09.2026**
(21) Anmeldenummer: 22184770.0
(22) Anmeldetag: 13.07.2022
(51) Int. Cl.: B67D 7/04, B67D 7/32, F17C 13/12, B60L 53/302

(54) **LADESÄULE MIT KRAFTSTOFFTANK UND LÜFTERVORRICHTUNG**
LOADING COLUMN WITH FUEL TANK AND VENTILATING DEVICE
COLONNE DE CHARGE AVEC RÉSERVOIR DE CARBURANT ET DISPOSITIF DE VENTILATION

(30) Priorität: 15.07.2021 DE 102021118322
(43) Veröffentlichungstag der Anmeldung: 18.01.2023
(73) Patentinhaber: Trinity Cleantech Private Limited, Telangana (IN)
(72) Erfinder: SOHL, Alexander, 12437 Berlin (DE); ADLER, Inès, 10783 Berlin (DE)
(74) Vertreter: MacLachlan IP Limited

(56) Entgegenhaltungen:
- EP-A2- 2 572 923
- DE-A1- 102017 118 328
- DE-A1- 102019 124 271

## Beschreibung

Die Erfindung betrifft ein Verfahren zur Betankung einer Ladesäule mit einem flüssigen und/oder gasförmigen Energieträger mit den Verfahrensschritten Registrieren eines Initialvorganges zur Betankung der Ladesäule, Aktivieren einer Lüftervorrichtung in der Ladesäule, Start des Befüllens des Tanks der Ladesäule mit einem flüssigen und/oder gasförmigen Energieträger, sowie eine Ladesäule, die zur Aufladung von Elektrofahrzeugen geeignet und dafür vorgesehen ist, mit einer ersten Sensorvorrichtung, einer Lüftervorrichtung, einem Tank für einen flüssigen und/oder gasförmigen Energieträger und einer Steuereinheit.

### Stand der Technik

Zur Aufladung des Energiespeichers von Elektrofahrzeugen sind Ladesäulen bekannt, die über eine in der Ladesäule angeordnete Energiekonversionseinheit zur Erzeugung elektrischer Energie verfügen. Dabei sind unterschiedliche Verfahren der Energiekonversion bekannt, die Energiekonversion kann z.B. durch Photovoltaik, Konversion von Windkraft, einer Brennstoffzelle und/oder einen Verbrennungsmotor mit angeschlossenem Generator erfolgen.

Brennstoffzelle und Verbrennungsmotor benötigen als primäre Energiequelle zum Betrieb einen flüssigen oder gasförmigen Energieträger. Dieser Energieträger wird in einem Tank in der Ladesäule gelagert und kann z.B. Wasserstoff (verflüssigt oder komprimiert), ein Alkanol (Methanol, Ethanol), Benzin- oder Dieselkraftstoff sein. Ihnen gemeinsam ist, dass sie leicht entzündlich, brennbar oder zumindest brandfördernd sind. Darüber hinaus entstehen bei alle Umwandlungsmechanismen Verluste, die im Betrieb Wärme erzeugen, was zu einem Aufheizen der Ladesäule führt. Daher kann eine Betankung der Ladesäule im laufenden Betrieb gefährlich für Nutzer und Betanker gleichermaßen sein. Eine Ladesäule nach dem Oberbegriff des Anspruchs 10 ist aus der DE 10 2019 124271 A1 bekannt.

Es ist daher Aufgabe der vorliegenden Erfindung, ein Verfahren zur Betankung einer Ladesäule zur Aufladung von Elektrofahrzeugen bereitzustellen, mit dem eine sichere und schnelle Betankung möglich ist. Es ist ebenfalls Aufgabe der vorliegenden Erfindung, eine Ladesäule zur Aufladung von Elektrofahrzeugen bereitzustellen, die sicher und schnell betankt werden kann.

Die Aufgabe wird mittels des Verfahrens zur Erzeugung und Abgabe von Ladestrom für ein Elektrofahrzeug gemäß Anspruch 1 und durch eine Ladesäule gemäß Anspruch 10 gelöst. Weitere vorteilhafte Ausführungen der Erfindung sind in den Unteransprüchen dargelegt.

### Das Verfahren

Die Aufgabe wird mittels des erfindungsgemäßen Verfahrens zur Betankung einer Ladesäule mit einem flüssigen und/oder gasförmigen Energieträger gemäß Anspruch 1 gelöst. Weitere vorteilhafte Ausführungen der Erfindung sind in den Unteransprüchen dargelegt.

Das erfindungsgemäße Verfahren zur Betankung einer Ladesäule mit einem flüssigen und/oder gasförmigen Energieträger weist drei Verfahrensschritte auf: Im ersten Verfahrensschritt wird ein Initialvorgang zur Betankung der Ladesäule initiiert. Mit dem Initialvorgang wird der Ladesäule angezeigt, dass ein Betankungsvorgang, also die Befüllung des Tanks mit dem Energieträger, unmittelbar oder innerhalb eines einstellbaren Zeitraumes bevorsteht. Der Zeitraum zwischen Initiierung des Initialvorgangs und dem eigentlichen Betankungsvorgang richtet sich insbesondere nach der im Tank der Ladesäule befindlichen Menge des Energieträgers. Diese Menge wird erfasst und in Bezug auf die prognostizierte Menge der abzugebenden Energie der Ladesäule gesetzt. Im zweiten Verfahrensschritt wird eine Lüftervorrichtung in der Ladesäule aktiviert und/oder betrieben. Die Lüftervorrichtung wird unmittelbar vor und während des Betankungsvorgangs in Betrieb genommen, um den im Tank der Ladesäule befindlichen Energieträger und den Innenraum und die Befüllvorrichtung insbesondere die Kontaktstellen des Energieträgers zu kühlen. Im dritten Verfahrensschritt wird das Befüllen des Tanks der Ladesäule mit einem flüssigen und/oder gasförmigen Energieträger gestartet. Das erfindungsgemäße Verfahren wird an dem Tank einer Ladesäule durchgeführt, die dafür vorgesehen ist, die Batterien von elektrisch angetriebenen Kraftfahrzeugen zu laden.

In einer weiteren Gestaltung der Erfindung wird die Lüftervorrichtung aktiviert, wenn ein Betankungsvorgang und/oder eine Temperatur über einer zuvor festgelegten Temperaturschwelle registriert wird. Insbesondere wird die Lüftervorrichtung zu Beginn des Betankungsvorgangs in Betrieb genommen. Die Lüftervorrichtung ist mindestens während eines Teils der Dauer des Betankungsvorgangs in Betrieb. In einer optionalen Ausführungsform ist die Lüftungsvorrichtung zumindest während 30% der Dauer des Betankungsvorganges in Betrieb, in bevorzugt zumindest während 50% der Dauer des Betankungsvorganges, besonders bevorzugt zumindest während 75% der Dauer des Betankungsvorganges und idealerweise während der gesamten Dauer des Betankungsvorgangs in Betrieb und kühlt den im Tank befindlichen Energieträger.

In einer weiteren Ausführung der Erfindung erzeugt die Lüftervorrichtung einen Luftstrom vom Inneren der Ladesäule durch einen Auslass nach außen. Die Lüftervorrichtung befördert die erwärmte Luft im Inneren der Ladesäule in einen Bereich außerhalb der Ladesäule, gleichzeitig strömt kühlere Luft aus einem Bereich außerhalb der Ladesäule in den Innenbereich der Ladesäule.

In einer weiteren Ausgestaltung der Erfindung erfolgt nach der Registrierung des Initialvorgangs eine Evaluierung des Initialvorgangs. Die Evaluierung erfolgt in Hinblick auf den Zeitpunkt des Betankungsvorgangs und/oder die Temperatur, insbesondere zu welchem Zeitpunkt genau eine Befüllung des Tanks mit dem Energieträger stattfinden wird.

In einer Weiterbildung der Erfindung wird nach der Evaluierung des Initialvorgangs der Betriebsmodus geändert. Die Ladesäule befindet sich üblicherweise in einem Betriebsmodus, in dem ein Aufladevorgang eines Kraftfahrzeugs möglich ist. In diesem Betriebsmodus ist eine Betankung der Ladesäule nicht möglich. Dieser Betriebsmodus wird nach der Evaluierung des Initialvorgangs in den Betankungsmodus der Ladesäule geändert, in dem eine Betankung der Ladesäule bzw. eine Befüllung des Tanks mit einem Energieträger möglich ist.

In einer weiteren Ausbildung der Erfindung verhindert nach der Änderung des Betriebsmodus die Steuerung, dass parallel die Betankung der Ladesäule und eine Aufladung von Elektrofahrzeugen ausgeführt werden. In dem Betankungsmodus der Ladesäule ist eine Betankung der Ladesäule möglich. Insbesondere zur Verhinderung von Funkenüberschlag und/oder der Abführung der Abwärme des Energieumwandlungsprozesses wird in dem Betankungsmodus eine gleichzeitig parallel erfolgende Aufladung eines Kraftfahrzeugs und eine Betankung der Ladesäule verhindert.

In einer Weiterbildung der Erfindung verhindert nach der Änderung des Betriebsmodus die Steuerung, dass parallel die Betankung der Ladesäule und die Energiekonversion ausgeführt werden. Nach der Änderung des Betriebsmodus in den Betankungsmodus der Ladesäule ist eine Betankung der Ladesäule möglich. Zur Verhinderung eines Funkenüberschlags und/oder der Abführung der Abwärme des Energieumwandlungsprozesses wird eine zeitgleich parallel erfolgende Betankung der Ladesäule und die Ausführung der Energiekonversion blockiert.

In einer weiteren Ausführung der Erfindung wird nach der Registrierung des Initialvorgangs zur Betankung der Ladesäule ein Prüfungsvorgang zur Prüfung des Betriebs der Lüftervorrichtung gestartet. Dazu wird im einfachsten Fall die Lüftervorrichtung kurzzeitig ein- und wieder ausgeschaltet. Dabei wird geprüft, ob die Lüftervorrichtung einen ausreichend starken Luftstrom um den Tank erzeugen kann oder ob der Luftstrom z.B. durch Verschmutzungen z.B. in Lufteinlass und/oder Luftauslass vermindert ist. Falls die Prüfung einen nicht ordnungsgemäßen Betrieb der Lüftervorrichtung ergibt, wird das Verfahren zur Betankung der Ladesäule an diesem Punkt abgebrochen. Optional wird eine entsprechende Meldung generiert und an den Betreiber der Ladesäule weitergeleitet.

In einer optionalen Weiterbildung der Erfindung wird die Lüftung für die Zufuhr von Sauerstoff für die Umwandlung von H2, Ethanol, Benzin, etc. auch für die Kühlung verwendet.

In einer weiteren Ausgestaltung der Erfindung wird der Luftstrom durch den Betrieb einer Lüftervorrichtung erzeugt. Dazu weist die Lüftervorrichtung mindestens ein vorzugsweise elektrisch angetriebenes Gebläse, z.B. einen Ventilator, auf. Eine weitere Variante der Lüftervorrichtung kann eine Teilklimaanlage mit Kühlfunktion sein, mit der eine Kühlung erreicht werden kann. Eine weitere Möglichkeit ist die Verwendung einer Vollklimaanlage als Lüftervorrichtung, die zusätzlich neben einer Kühlung auch eine Erwärmung der Luft und Anpassung der Luftfeuchte ermöglicht.

In einer vorteilhaften Gestaltung der Erfindung ist die Außentemperatur niedriger als die Temperatur des Luftstroms beim Verlassen der Ladesäule. Die Kühlung des Inneren der Ladesäule ist also eine aktive Kühlung, die durch passive Elemente, z.B. Kühlrippen an geeigneten Stellen, unterstützt werden kann. Die Kühlung mittels eines erzeugten Luftstroms nutzt vorwiegend die Konvektion, d.h. die erwärmte Luft wird aus dem Inneren der Ladesäule nach außen transportiert.

In einer weiteren Ausbildung der Erfindung wird der Betrieb der Lüftervorrichtung gestartet, sofern die Lüftervorrichtung zum Zeitpunkt der Registrierung des Initialvorgangs noch nicht in Betrieb ist. Die Lüftervorrichtung kann auch unabhängig von dem Verfahren zur Betankung der Ladesäule in Betrieb genommen werden, wenn z.B. die Temperatur innerhalb der Ladesäule speziell im Bereich des Tanks einen einstellbaren Schwellwert überschreitet. Dann ist die Lüftervorrichtung zum Zeitpunkt der Registrierung des Initialvorgangs bereits in Betrieb. Auf diese Weise wird die Temperatur innerhalb der Ladesäule unter dem Schwellwert gehalten, was insbesondere bei Lagerung von brennbaren Energieträgern (z.B. Alkanole, Wasserstoff) zu einem Sicherheitsgewinn führt.

In einer Weiterbildung der Erfindung wird das Erzeugen des Luftstroms nach Beendigung des Tankvorganges beendet. Falls jedoch innerhalb der Ladesäule, insbesondere in unmittelbarer Umgebung des Tanks die Temperatur einen einstellbaren Schwellwert überschreitet, kann die die Lüftervorrichtung weiter betrieben werden, die Kühlfunktion bleibt erhalten.

In einer weiteren Ausführung der Erfindung beinhaltet der Initialvorgang den Empfang eines Sensorsignals, die Eingabe eines Nutzers und/oder die Authentifizierung des Nutzers. Der Initialvorgang ist im einfachsten Fall das Öffnen der Zugangsöffnung des Tanks. Der Initialvorgang kann aber auch der Empfang eines Sensorsignals sein, wenn sich z.B. ein Tankfahrzeug oder ein authentifizierter Betanker der Ladesäule nähert. Der Initialvorgang kann gleichermaßen die Eingabe eines Nutzers bzw. dessen Authentifizierung in eine HMI-Einheit der Ladesäule und/oder ein mit der Ladesäule verbundenes Gerät, z.B. ein Smartphone mit geeigneter Software, sein. Möglich ist ebenfalls eine Kombination der genannten Möglichkeiten des Initialvorgangs.

Die Aufgabe wird außerdem durch die erfindungsgemäße Ladesäule, die zur Aufladung von Batterien von Elektrofahrzeugen geeignet und dafür vorgesehen ist, gelöst.

Die erfindungsgemäße Ladesäule weist eine erste Sensorvorrichtung sowie eine Lüftervorrichtung auf. Die erfindungsgemäße Ladesäule weist außerdem einen Tank für einen flüssigen und/oder gasförmigen Energieträger auf. Im Tank wird der Kraftstoff gelagert, der in der Ladesäule als primäre Energiequelle verwendet wird. Der Tank ist vorzugsweise für flüssige Kraftstoffe ausgelegt (z.B. Benzin, Dieselkraftstoff, Methanol), kann aber auch für gasförmige Kraftstoffe, z.B. Wasserstoff ausgelegt sein. Mittels der Lüftervorrichtung wird während des Betankungsvorgangs der Bereich unmittelbar um den Tank und Einfüllstutzen herum gekühlt. Dies wird z.B. durch den Einsatz eines Lüftergebläses in der Lüftervorrichtung realisiert. Eine weitere Variante der Lüftervorrichtung kann eine Teilklimaanlage mit Kühlfunktion sein, mit der eine Kühlung des unmittelbaren Bereichs um den Tank erreicht werden kann. Eine weitere Möglichkeit ist die Verwendung einer Vollklimaanlage als Lüftervorrichtung, die zusätzlich neben einer Kühlung auch eine Erwärmung der Luft und Anpassung der Luftfeuchte ermöglicht.

Die erfindungsgemäße Ladesäule weist zusätzlich eine Steuereinheit auf. Die Steuereinheit ist ein in der Ladesäule angeordneter Computer und/oder ein mit der Ladesäule verbundener Computer mit geeigneter Software/App, die den Aufladevorgang der Batterie eines Kraftfahrzeugs steuert sowie die Lüftervorrichtung ansteuert.

In einer Weiterbildung der Erfindung ist die Lüftervorrichtung derart angeordnet, dass durch den Betrieb der Lüftervorrichtung der Tank kühlbar ist. Die Lüftervorrichtung weist dazu einen Lufteinlass auf, der in Kombination mit einem Luftauslass derart angeordnet ist, dass bei Betrieb der Lüftervorrichtung ein Luftstrom zwischen Lufteinlass und Luftauslass um den Tank herum geführt wird.

Gemäß der Erfindung weist die Ladesäule eine erste Sensorvorrichtung auf. Die erste Sensorvorrichtung ist dafür vorgesehen und dafür geeignet, einen Initialvorgang für die Befüllung des Tanks der Ladesäule zu erkennen. Mit dem Initialvorgang wird der Ladesäule angezeigt, dass ein Betankungsvorgang, also die Befüllung des Tanks mit dem Energieträger, unmittelbar oder innerhalb eines einstellbaren Zeitraumes bevorsteht. Der Zeitraum zwischen Initiierung des Initialvorgangs und dem eigentlichen Betankungsvorgang richtet sich insbesondere nach der im Tank der Ladesäule befindlichen Menge des Energieträgers. Diese Menge wird erfasst und in Bezug auf die prognostizierte Menge der abzugebenden Energie der Ladesäule gesetzt.

In einer weiteren Ausführung der Erfindung weist die Ladesäule eine zweite Sensorvorrichtung auf. Die zweite Sensorvorrichtung ist dafür vorgesehen und geeignet, einen Betankungsvorgang der Ladesäule zu erkennen. Die zweite Sensorvorrichtung erkennt insbesondere auch das Ende des Betankungsvorgangs.

In einer weiteren Ausbildung der Erfindung weist die Ladesäule eine Energiekonversionseinheit auf. Die Energiekonversion kann z.B. durch Photovoltaik, Konversion von Windkraft, einer Brennstoffzelle und/oder einen Verbrennungsmotor mit angeschlossenem Generator erfolgen. Die Vorrichtung zur Energiekonversion ist in der Ladesäule selbst angeordnet oder mit ihr verbunden. Die Ladesäule ist dadurch sehr kompakt aufgebaut, kann autark betrieben werden und beansprucht zur Aufstellung wenig Platz. Ein Gehäuse schützt die in der Ladesäule angeordneten Komponenten, insbesondere die Vorrichtung zur Energiekonversion, vor Witterungseinflüssen und Vandalismus.

In einer vorteilhaften Ausgestaltung der Erfindung weist die Ladesäule eine Vorrichtung zur Unterbrechung des Betriebs der Energiekonversionseinheit auf. Die Vorrichtung zur Unterbrechung des Betriebs der Energiekonversionseinheit ist mit der gleichen Steuereinheit gekoppelt wie die erste und/oder die zweite Sensorvorrichtung. Mittels der Vorrichtung zur Unterbrechung des Betriebs der Energiekonversionseinheit wird die Energiekonversion in der Energiekonversionseinheit während des Betankungsvorgangs unterbrochen. Außerdem nimmt die Vorrichtung zur Unterbrechung des Betriebs der Energiekonversionseinheit die Energiekonversionseinheit nach Beendigung des Betankungsvorgangs wieder in Betrieb.

In einer weiteren Ausführung der Erfindung weist die die Ladesäule eine Ladevorrichtung auf. Der erste Anschluss weist ein oder mehrere Ladekabel auf, die mit einem Elektro-Kraftfahrzeug verbindbar sind und über die die Aufladung des Elektro-Kraftfahrzeugs erfolgt.

Ausführungsbeispiele des erfindungsgemäßen Verfahrens zur Betankung einer Ladesäule und der erfindungsgemäßen Ladesäule sind in den Zeichnungen schematisch vereinfacht dargestellt und werden in der nachfolgenden Beschreibung näher erläutert.

Es zeigen:
- Fig. 1:: Die erfindungsgemäße Ladesäule
- Fig. 2:: Die erfindungsgemäße Ladesäule mit einer ersten Sensorvorrichtung an der Tanköffnung
- Fig. 3:: Die erfindungsgemäße Ladesäule mit einer zweiten Sensorvorrichtung an der Tanköffnung
- Fig. 4:: Die erfindungsgemäße Ladesäule mit einer Vorrichtung zur Unterbrechung der Energiekonversion
- Fig. 5:: Die erfindungsgemäße Ladesäule mit einer Vorrichtung zur Unterbrechung des Ladevorgangs eines Elektro-Kraftfahrzeugs

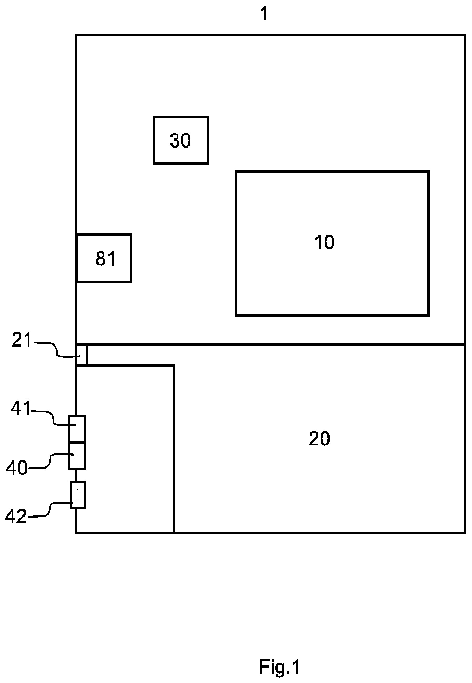

Ein Ausführungsbeispiel der erfindungsgemäßen Ladesäule 1 zeigt Fig. 1. Die Ladesäule 1 weist eine Energiekonversionsvorrichtung 10 auf, die in diesem und den folgenden Ausführungsbeispielen eine Kombination von Verbrennungsmotor und davon angetriebenem Generator ist. Der Verbrennungsmotor ist üblicherweise ein Kolben-Verbrennungsmotor, möglich sind aber auch andere Bauformen wie z.B. Wankelmotor oder Turbine. Betrieben wird der Verbrennungsmotor vorteilhafterweise vorzugsweise mit Methanol oder Ethanol oder einem Gemisch von Methanol und Ethanol. Beide Kraftstoffarten können aus Biomasse umweltverträglich hergestellt werden, sind weltweit als Kraftstoffe seit Langem etabliert und stehen somit preiswert zur Verfügung. Ihr Transport und ihre Lagerung sowie ihr Betrieb in Verbrennungsmotoren sind vergleichbar mit herkömmlichem Benzin (für Kraftfahrzeuge) und damit unproblematisch. Andere Arten der Energiekonversionsvorrichtung 10 sind möglich, denkbar ist eine Brennstoffzelle, die z.B. mittels komprimiertem Wasserstoff oder ebenfalls Methanol betrieben werden kann. Die Lagerung des Kraftstoffs in der erfindungsgemäßen Ladesäule 1 erfolgt in einem Energiespeicher (Tank) 20, der über die Tanköffnung 21 befüllbar ist.

Zur Kühlung des Tanks 20 weist die Ladesäule 1 eine Lüftervorrichtung 40 auf. Die Lüftervorrichtung 40 ist derart angeordnet, dass sie den Tank 20 kühlt. Die Lüftervorrichtung 40 erzeugt während ihres Betriebs einen Luftstrom zwischen Lufteinlass 41 und Luftauslass 42, der an der Tanköffnung 20 vorbei geführt ist. Dies wird z.B. durch den Einsatz eines Lüftergebläses in der Lüftervorrichtung 40 realisiert. Eine weitere Variante der Lüftervorrichtung 40 kann eine Teilklimaanlage mit Kühlfunktion sein, mit der eine Kühlung des unmittelbaren Bereichs um den Tank 20 erreicht werden kann. Eine weitere Möglichkeit ist die Verwendung einer Vollklimaanlage als Lüftervorrichtung 40, die zusätzlich neben einer Kühlung auch eine Erwärmung der Luft und Anpassung der Luftfeuchte ermöglicht.

Das erfindungsgemäße Verfahren zur Betankung der Ladesäule 1 beginnt mit der Registrierung eines Initialvorgangs durch die erste Sensorvorrichtung 81 zur Befüllung des Tanks 20. Der Initialvorgang kann z.B. der Empfang eines Sensorsignals sein, wenn sich z.B. ein Tankfahrzeug der Ladesäule 1 nähert. Nach Registrierung des Initialvorgangs führt die Steuereinheit 30 einen Prüfungsvorgang zur Prüfung des ordnungsgemäßen Betriebs der Lüftervorrichtung 40 durch. In einer Weiterbildung dieser Ausführungsform wird auch die Temperatur und der Füllstrand der Anlage geprüft. Dabei wird geprüft, ob die Lüftervorrichtung 40 sowohl ein- und ausschaltet als auch einen ausreichend starken Luftstrom um den Tank 20 erzeugen kann oder ob der Luftstrom z.B. durch Verschmutzungen in Lufteinlass 41 und/oder Luftauslass 42 vermindert ist. Falls die Prüfung einen nicht ordnungsgemäßen Betrieb der Lüftervorrichtung 40 ergibt, wird das Verfahren zur Betankung der Ladesäule 1 an diesem Punkt abgebrochen. Die Steuereinheit 30 evaluiert den registrierten Initialvorgang auf den Zeitpunkt der anstehenden Betankung der Ladesäule 1, insbesondere wird der Zeitpunkt festgestellt, an dem die Befüllung des Tanks 20 stattfinden wird.

Bei Weiterführung des Verfahrens zur Betankung der Ladesäule 1 ändert die Steuereinheit 30 den Betriebsmodus der Ladesäule 1 von dem Betriebsmodus zur Aufladung eines Elektro-Kraftfahrzeugs in den Betankungsmodus. Die Änderung des Betriebsmodus der Ladesäule 1 kann unmittelbar nach dem Prüfungsvorgang der Lüftervorrichtung 40 stattfinden. Die Änderung des Betriebsmodus kann auch zu dem Zeitpunkt erfolgen, den die Steuereinheit 30 während der Evaluierung des Initialvorgangs als Zeitpunkt des Beginns des Befüllens des Tanks 20 festgestellt hat.

Nach Registrierung und Evaluierung des Initialvorgangs und Versetzen der Ladesäule 1 in den Betankungsmodus wird die Lüftervorrichtung 40 zur Kühlung des Tanks 20 aktiviert, sofern die Lüftervorrichtung 40 nicht bereits in Betrieb ist. Die Lüftervorrichtung 40 kann auch unabhängig von einem Verfahren zur Betankung der Ladesäule 1 in Betrieb genommen werden, wenn z.B. die Temperatur innerhalb der Ladesäule 1 speziell im Bereich des Tanks 20 einen einstellbaren Schwellwert überschreitet. Zur Kühlung des Tanks 20 erzeugt die Lüftervorrichtung 40 einen Luftstrom innerhalb der Ladesäule 1, der zwischen Lufteinlass 41 und Luftauslass 42 strömt. Der erzeugte Luftstrom weist beim Verlassen der Ladesäule 1 durch den Luftauslass 42 eine Temperatur auf, die höher ist als die Außentemperatur der unmittelbaren Umgebung der Ladesäule 1. Danach wird der Tank 20 der Ladesäule 1 über die Tanköffnung 21 mit dem Energieträger befüllt.

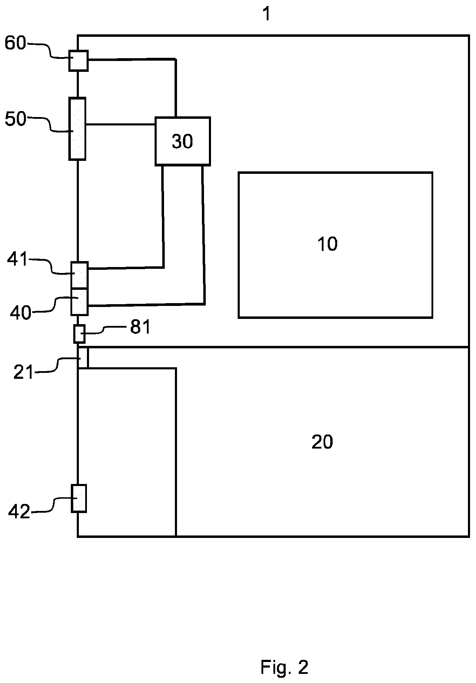

Fig. 2 zeigt ein weiteres Ausführungsbeispiel der erfindungsgemäßen Ladesäule 1. Die Ladesäule 1 ist die im vorhergehenden Ausführungsbeispiel (s. Fig. 1) beschriebene, sie weist aber zusätzliche Komponenten auf: Die Ladesäule 1 weist neben der Energiekonversionsvorrichtung 10, Tank 20 mit Tanköffnung 21, der Lüftervorrichtung 40 mit Einlass 41 und Auslass 42, der Steuereinheit 30 und erster Sensorvorrichtung 81 eine HMI-Einheit 50 auf.

Die HMI-Einheit 50 weist eine Anzeige- und Bedieneinrichtung auf, auf dem die für den Ladevorgang des Elektrofahrzeugs relevanten Daten wie zum Beispiel Ladestrom,

Ladedauer und Kosten des Ladevorgangs abgerufen und angezeigt werden. Außerdem kann ein Nutzer den Ladevorgang einleiten bzw. beenden sowie bezahlen. Dabei sind verschiedene Bezahlsysteme möglich, z.B. über verschiedene Kreditkarten. Andere Bezahlsysteme sind ebenfalls möglich, z.B. über ein mobiles Endgerät (Smartphone). Über die Kommunikationsschnittstelle 60, die eine Internetverbindung z.B. mit einem Verwaltungssystem oder alternativ mit einem Cloud-Speicher herstellt, ist die Ladesäule 1 mit dem Betreiber der Ladesäule 1 und/oder ggf. einer Mehrzahl von Ladesäulen verbunden.

Die Steuereinheit 30 ist mit der HMI-Einheit 50, der Lüftervorrichtung 40 sowie der ersten Sensorvorrichtung 81 verbunden und steuert außerdem das erfindungsgemäße Verfahren zur Betankung der Ladesäule 1. Das erfindungsgemäße Verfahren zur Betankung der Ladesäule 1 beginnt ebenfalls mit der Registrierung eines Initialvorgangs durch die erste Sensorvorrichtung 81 zur Befüllung des Tanks 20. Der Initialvorgang ist im einfachsten Fall das Öffnen der Tanköffnung 21. Die erste Sensorvorrichtung 81 ist deshalb in diesem Ausführungsbeispiel direkt an der Tanköffnung 21 angeordnet und mit ihr verbunden.

Nach Registrierung des Initialvorgangs führt die Steuereinheit 30 einen Prüfungsvorgang zur Prüfung des ordnungsgemäßen Betriebs der Lüftervorrichtung 40 durch. Wiederum entscheidet die Prüfung der Lüftervorrichtung 40 über die Weiterführung des erfindungsgemäßen Verfahrens zur Betankung der Ladesäule 1. Die Steuereinheit 30 evaluiert den registrierten Initialvorgang auf den Zeitpunkt der anstehenden Betankung der Ladesäule 1. Danach ändert die Steuereinheit 30 den Betriebsmodus der Ladesäule 1 von dem Betriebsmodus zur Aufladung eines Elektro-Kraftfahrzeugs in den Betankungsmodus.

Nach Registrierung und Evaluierung des Initialvorgangs und Versetzen der Ladesäule 1 in den Betankungsmodus wird abermals die Lüftervorrichtung 40 zur Kühlung des Tanks 20 aktiviert, sofern die Lüftervorrichtung 40 nicht bereits in Betrieb ist. Die Lüftervorrichtung 40 weist dazu den Lufteinlass 41 an der Basis der Ladesäule 1 auf, der Luftauslass 42 ist etwa in der Mitte der Höhe der Ladesäule 1 angeordnet. Lufteinlass 41 und Luftauslass 42 können auch umgekehrt angeordnet sein bzw. die Lüftervorrichtung 40 kann auch den Luftstrom umkehren, z.B. durch entgegengesetzten Drehsinn eines in der Lüftervorrichtung 40 angeordneten Lüfters. Wichtig zur Durchführung des erfindungsgemäßen Verfahrens ist lediglich ein mittels der Lüftervorrichtung 40 erzeugter Luftstrom, der zwischen Lufteinlass 41 und Luftauslass 42 um den Tank 20 herum geführt ist. Danach wird der Tank 20 der Ladesäule 1 über die Tanköffnung 21 mit dem Energieträger befüllt.

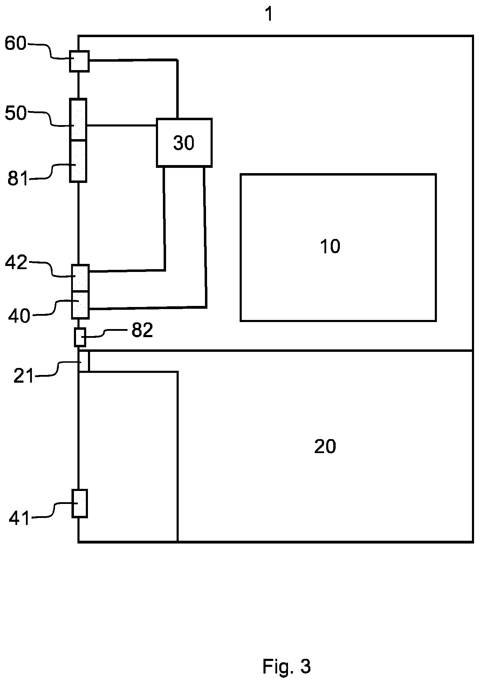

Ein weiteres Ausführungsbeispiel der erfindungsgemäßen Ladesäule 1 zeigt Fig. 3. Die Ladesäule 1 ist die in den vorhergehenden Ausführungsbeispielen (s. Fig. 1, 2) beschriebene und weist neben der Energiekonversionsvorrichtung 10, Tank 20 mit Tanköffnung 21, der Lüftervorrichtung 40 mit Einlass 41 und Auslass 42, der Steuereinheit 30 und erster Sensorvorrichtung 81, der HMI-Einheit 50 zusätzlich eine zweite Sensorvorrichtung 82 auf.

Die Steuereinheit 30 ist mit der HMI-Einheit 50, der Lüftervorrichtung 40, der ersten Sensorvorrichtung 81 sowie der zweiten Sensorvorrichtung 82 verbunden und steuert das erfindungsgemäße Verfahren zur Betankung der Ladesäule 1. Das erfindungsgemäße Verfahren zur Betankung der Ladesäule 1 beginnt ebenfalls mit der Registrierung eines Initialvorgangs durch die erste Sensorvorrichtung 81 zur Befüllung des Tanks 20.

Der Initialvorgang ist im einfachsten Fall das Öffnen der Tanköffnung 21. Die erste Sensorvorrichtung 81 ist deshalb in diesem Ausführungsbeispiel direkt an der Tanköffnung 21 angeordnet und mit ihr verbunden.

Nach Registrierung des Initialvorgangs führt die Steuereinheit 30 einen Prüfungsvorgang zur Prüfung des ordnungsgemäßen Betriebs der Lüftervorrichtung 40 durch. Wiederum entscheidet die Prüfung der Lüftervorrichtung 40 über die Weiterführung des erfindungsgemäßen Verfahrens zur Betankung der Ladesäule 1. Die Steuereinheit 30 evaluiert den registrierten Initialvorgang auf den Zeitpunkt der anstehenden Betankung der Ladesäule 1. Danach ändert die Steuereinheit 30 den Betriebsmodus der Ladesäule 1 von dem Betriebsmodus zur Aufladung eines Elektro-Kraftfahrzeugs in den Betankungsmodus.

Nach Registrierung und Evaluierung des Initialvorgangs und Versetzen der Ladesäule 1 in den Betankungsmodus wird abermals die Lüftervorrichtung 40 zur Kühlung des Tanks 20 aktiviert, sofern die Lüftervorrichtung 40 nicht bereits in Betrieb ist. Die Lüftervorrichtung 40 weist dazu den Lufteinlass 41 an der Basis der Ladesäule 1 auf, der Luftauslass 42 ist etwa in der Mitte der Höhe der Ladesäule 1 angeordnet. Lufteinlass 41 und Luftauslass 42 können auch umgekehrt angeordnet sein bzw. die Lüftervorrichtung 40 kann auch den Luftstrom umkehren. Wichtig zur Durchführung des erfindungsgemäßen Verfahrens ist lediglich ein mittels der Lüftervorrichtung 40 erzeugter Luftstrom, der zwischen Lufteinlass 41 und Luftauslass 42 um den Tank 20 herum geführt ist. Danach wird der Tank 20 der Ladesäule 1 über die Tanköffnung 21 mit dem Energieträger befüllt.

Der Vorgang der Befüllung wird von der zweiten Sensorvorrichtung 82 erkannt. Nach erfolgter Befüllung des Tanks 20 mit dem Energieträger wird dies durch die zweite Sensorvorrichtung 82 registriert, und das Erzeugen des Luftstroms mittels der Lüftervorrichtung 40 wird beendet. Falls jedoch innerhalb der Ladesäule 1, insbesondere in unmittelbarer Umgebung des Tanks 20 die Temperatur den einstellbaren Schwellwert überschreitet, kann die Kühlung durch die Lüftervorrichtung 40 fortgesetzt werden. Außerdem versetzt die Steuereinheit 30 die Ladesäule 1 aus dem Betankungsmodus wieder in den Betriebsmodus, die Ladesäule 1 steht für die Aufladung eines Elektro-Kraftfahrzeugs zur Verfügung.

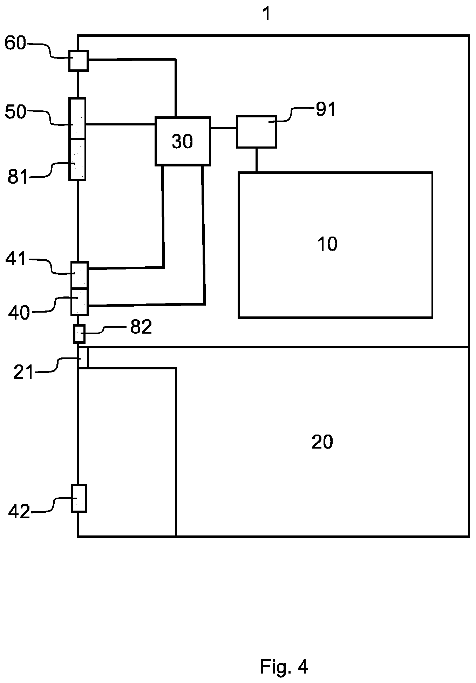

Fig. 4 zeigt ein weiteres Ausführungsbeispiel der erfindungsgemäßen Ladesäule 1. Die Ladesäule 1 ist die in den vorhergehenden Ausführungsbeispielen (s. Fig. 1, 2, 3) beschriebene und weist neben der Energiekonversionsvorrichtung 10, Tank 20 mit Tanköffnung 21, der Lüftervorrichtung 40 mit Einlass 41 und Auslass 42, der Steuereinheit 30, erster Sensorvorrichtung 81, zweiter Sensorvorrichtung 82, HMI-Einheit 50 zusätzlich eine Vorrichtung 91 zur Unterbrechung des Betriebs der Energiekonversionseinheit 10 auf. Die Steuereinheit 30 ist mit der HMI-Einheit 50, der Lüftervorrichtung 40, der ersten Sensorvorrichtung 81, der zweiten Sensorvorrichtung 82 sowie der Vorrichtung 91 zur Unterbrechung des Betriebs der Energiekonversionseinheit 10 verbunden.

Das erfindungsgemäße Verfahren zur Betankung der Ladesäule 1 beginnt ebenfalls mit der Registrierung eines Initialvorgangs durch die erste Sensorvorrichtung 81 zur Befüllung des Tanks 20. Nach Registrierung des Initialvorgangs führt die Steuereinheit 30 einen Prüfungsvorgang zur Prüfung des ordnungsgemäßen Betriebs der Lüftervorrichtung 40 durch. Wiederum entscheidet die Prüfung der Lüftervorrichtung 40 über die Weiterführung des erfindungsgemäßen Verfahrens zur Betankung der Ladesäule 1. Die Steuereinheit 30 evaluiert den registrierten Initialvorgang auf den Zeitpunkt der anstehenden Betankung der Ladesäule 1. Danach ändert die Steuereinheit 30 den Betriebsmodus der Ladesäule 1 von dem Betriebsmodus zur Aufladung eines Elektro-Kraftfahrzeugs in den Betankungsmodus.

Im Betankungsmodus unterbricht die Steuereinheit 30 durch Aktivierung der Vorrichtung 91 zur Unterbrechung des Betriebs die Energiekonversionsvorrichtung 10. Die Konversion des im Tank 20 gelagerten Energieträgers in elektrische Energie zur Aufladung eines Elektro-Kraftfahrzeugs wird also gestoppt. Die Steuereinheit 30 verhindert aus Sicherheitsgründen im Betankungsmodus eine zeitlich parallel stattfindende Betankung der Ladesäule 1 und den Betrieb der Energiekonversionsvorrichtung 10.

Nach Registrierung und Evaluierung des Initialvorgangs und Versetzen der Ladesäule 1 in den Betankungsmodus wird abermals die Lüftervorrichtung 40 zur Kühlung des Tanks 20 aktiviert, sofern die Lüftervorrichtung 40 nicht bereits in Betrieb ist. der Ladesäule 1 angeordnet. Danach wird der Tank 20 der Ladesäule 1 über die Tanköffnung 21 mit dem Energieträger befüllt.

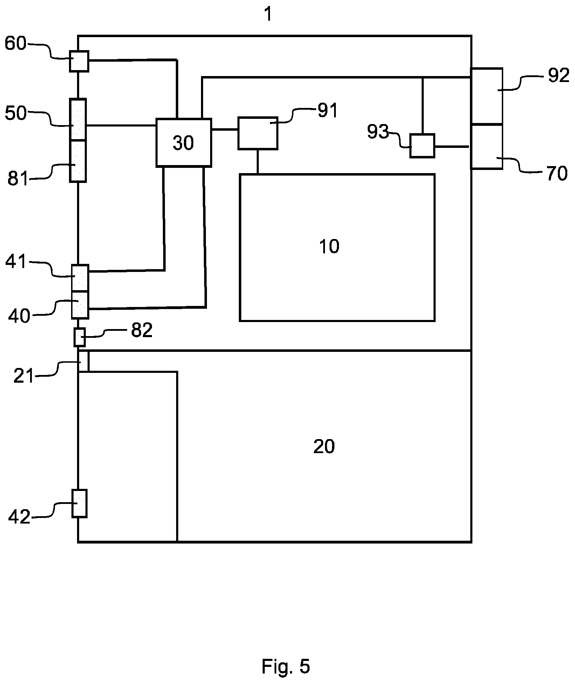

Ein weiteres Ausführungsbeispiel der erfindungsgemäßen Ladesäule 1 zeigt Fig. 5. Die Ladesäule 1 ist die in den vorhergehenden Ausführungsbeispielen (s. Fig. 1, 2, 3, 4) beschriebene und weist neben der Energiekonversionsvorrichtung 10, Tank 20 mit Tanköffnung 21, der Lüftervorrichtung 40 mit Einlass 41 und Auslass 42, der Steuereinheit 30, erster Sensorvorrichtung 81, zweiter Sensorvorrichtung 82, HMI-Einheit 50, die Vorrichtung 91 zur Unterbrechung des Betriebs der Energiekonversionseinheit 10 zusätzlich die Ladevorrichtung 70 sowie die Vorrichtung 92 zur Unterbrechung des Betriebs der Ladevorrichtung 70 auf.

Die Ladevorrichtung 70 weist ein oder mehrere Ladekabel auf, mit dem ein zu ladendes Elektrofahrzeug geladen wird. Das Ladekabel weist außerdem eine Datenleitung auf, die eine Datenverbindung zwischen Steuereinheit 30 und Elektrofahrzeug herstellt. Über die Datenleitung wird eine Kommunikation zur Batterie des zu ladenden Elektrofahrzeugs aufgebaut und die erforderlichen Daten wie Ladezustand, Ladespannung und Ladestrom abgefragt. Die Steuereinheit 30 stellt aufgrund dieser Daten die Parameter des Ladestroms ein.

Die Steuereinheit 30 ist mit der HMI-Einheit 50, der Lüftervorrichtung 40, der ersten Sensorvorrichtung 81, der zweiten Sensorvorrichtung 82, der Vorrichtung 91 zur Unterbrechung des Betriebs der Energiekonversionseinheit 10, der Ladevorrichtung 70 sowie der Vorrichtung 92 zur Unterbrechung des Betriebs der Ladevorrichtung 70 verbunden.

Das erfindungsgemäße Verfahren zur Betankung der Ladesäule 1 beginnt ebenfalls mit der Registrierung eines Initialvorgangs durch die erste Sensorvorrichtung 81 zur Befüllung des Tanks 20. Der Initialvorgang kann neben der Öffnung der Tanköffnung 21 die Eingabe eines Nutzers bzw. dessen Authentifizierung in die HMI-Einheit 50 und/oder ein mit der HMI-Einheit 50 verbundenes Gerät, z.B. ein Smartphone mit geeigneter Software, sein. Möglich ist ebenfalls eine Kombination der genannten Möglichkeiten des Initialvorgangs.

Nach Registrierung des Initialvorgangs führt die Steuereinheit 30 einen Prüfungsvorgang zur Prüfung des ordnungsgemäßen Betriebs der Lüftervorrichtung 40 durch. Wiederum entscheidet die Prüfung der Lüftervorrichtung 40 über die Weiterführung des erfindungsgemäßen Verfahrens zur Betankung der Ladesäule 1. Optional wird eine entsprechende Meldung generiert und über die Kommunikationsschnittstelle 60 an den Betreiber der Ladesäule 1 weitergeleitet.

Im Betankungsmodus unterbricht die Steuereinheit 30 durch Aktivierung der Vorrichtung 91 zur Unterbrechung des Betriebs die Energiekonversionsvorrichtung 10. Die Konversion des im Tank 20 gelagerten Energieträgers in elektrische Energie zur Aufladung eines Elektro-Kraftfahrzeugs wird also gestoppt. Die Steuereinheit 30 verhindert aus Sicherheitsgründen im Betankungsmodus eine zeitlich parallel stattfindende Betankung der Ladesäule 1 und den Betrieb der Energiekonversionsvorrichtung 10.

Nach Änderung des Betriebsmodus der Ladesäule 1 in den Betankungsmodus wird zusätzlich ein zu diesem Zeitpunkt evtl. durchgeführter Aufladevorgang des Elektro-Kraftfahrzeugs angehalten, um Funkenüberschlag zu vermeiden. Dazu weist die Steuereinheit 30 die Vorrichtung 93 zur Unterbrechung eines Ladevorgangs an, den Ladevorgang des Elektro-Kraftfahrzeugs anzuhalten. Die Vorrichtung 93 zur Unterbrechung eines Ladevorgangs ist ebenfalls mit der Steuereinheit 30 verbunden.

Nach Registrierung und Evaluierung des Initialvorgangs und Versetzen der Ladesäule 1 in den Betankungsmodus wird abermals die Lüftervorrichtung 40 zur Kühlung des Tanks 20 aktiviert, sofern die Lüftervorrichtung 40 nicht bereits in Betrieb ist. Danach wird der Tank 20 der Ladesäule 1 über die Tanköffnung 21 mit dem Energieträger befüllt.

### BEZUGSZEICHENLISTE

- 1: Ladesäule
- 10: Energiekonversionsvorrichtung
- 20: Tank
- 21: Tanköffnung
- 30: Steuereinheit
- 40: Lüftervorrichtung/Kühlungsvorrichtung
- 41: Lufteinlass
- 42: Luftauslass
- 50: HMI-Einheit
- 60: Kommunikationsschnittstelle
- 70: Ladevorrichtung
- 81: Erste Sensorvorrichtung
- 82: Zweite Sensorvorrichtung
- 91: Vorrichtung zur Unterbrechung des Betriebs der Energiekonversionsvorrichtung
- 92: Vorrichtung zur Unterbrechung des Betriebs der Ladevorrichtung
- 93: Vorrichtung zur Unterbrechung des Ladevorgangs

## Patentansprüche

1. Verfahren zur Betankung einer Ladesäule (1) mit einem flüssigen und/oder gasförmigen Energieträger mit den Verfahrensschritten
- Registrieren eines Initialvorganges zur Betankung der Ladesäule (1)
- Aktivieren und/oder Betrieb einer Lüftervorrichtung (40) in der Ladesäule (1),
- Start des Befüllens des Tanks (20) der Ladesäule (1) mit einem flüssigen und/oder gasförmigen Energieträger.

2. Verfahren zur Betankung einer Ladesäule (1) mit einem flüssigen und/oder gasförmigen Energieträger mit den Verfahrensschritten nach Anspruch 1
**dadurch gekennzeichnet, dass**
die Lüftervorrichtung (40) aktiviert wird, wenn ein Betankungsvorgang und/oder eine Temperatur über einer zuvor festgelegten Temperaturschwelle registriert wird.

3. Verfahren zur Betankung einer Ladesäule (1) mit einem flüssigen und/oder gasförmigen Energieträger mit den Verfahrensschritten nach Anspruch 1 oder 2
**dadurch gekennzeichnet, dass**
ein Luftstrom durch den Betrieb einer Lüftervorrichtung (40) erzeugt wird und
die Lüftervorrichtung (40) den Luftstrom vom Inneren der Ladesäule (1) durch einen Auslass (42) nach außen erzeugt.

4. Verfahren zur Betankung einer Ladesäule (1) mit einem flüssigen und/oder gasförmigen Energieträger mit den Verfahrensschritten nach einem oder mehreren der vorhergehenden Ansprüche
**dadurch gekennzeichnet, dass**
nach der Registrierung des Initialvorganges eine Evaluierung des Initialvorganges erfolgt,
wobei nach der Evaluierung des Initialvorganges der Betriebsmodus geändert wird,
wobei nach der Änderung des Betriebsmodus die Steuereinheit (30) verhindert, dass parallel die Betankung der Ladesäule (1) und eine Aufladung von Elektrofahrzeugen ausgeführt werden, und
wobei nach der Änderung des Betriebsmodus die Steuereinheit (30) verhindert, dass parallel die Betankung der Ladesäule (1) und die Energiekonversion zur Erzeugung elektrischer Energie ausgeführt werden.

5. Verfahren zur Betankung einer Ladesäule (1) mit einem flüssigen und/oder gasförmigen Energieträger mit den Verfahrensschritten nach einem oder mehreren der vorhergehenden Ansprüche
**dadurch gekennzeichnet, dass**
nach der Registrierung des Initialvorganges zur Betankung der Ladesäule (1) ein Prüfungsvorgang zur Prüfung des Betriebs der Lüftervorrichtung (40) gestartet wird.

6. Verfahren zur Betankung einer Ladesäule (1) mit einem flüssigen und/oder gasförmigen Energieträger mit den Verfahrensschritten nach Anspruch 3
**dadurch gekennzeichnet, dass**
die Außentemperatur niedriger ist als die Temperatur des Luftstroms beim Verlassen der Ladesäule (1).

7. Verfahren zur Betankung einer Ladesäule (1) mit einem flüssigen und/oder gasförmigen Energieträger mit den Verfahrensschritten nach einem oder mehreren der vorhergehenden Ansprüche
**dadurch gekennzeichnet, dass**
der Betrieb der Lüftervorrichtung (40) gestartet wird, sofern die Lüftervorrichtung (40) zum Zeitpunkt des Initialvorganges noch nicht in Betrieb ist.

8. Verfahren zur Betankung einer Ladesäule (1) mit einem flüssigen und/oder gasförmigen Energieträger mit den Verfahrensschritten nach Anspruch 3
**dadurch gekennzeichnet, dass**
das Erzeugen des Luftstroms nach Beendigung des Tankvorganges beendet wird.

9. Verfahren zur Betankung einer Ladesäule (1) mit einem flüssigen und/oder gasförmigen Energieträger mit den Verfahrensschritten nach einem oder mehreren der vorhergehenden Ansprüche
**dadurch gekennzeichnet, dass**
der Initialvorgang den Empfang eines Sensorsignals, die Eingabe eines Nutzers und/oder die Authentifizierung des Nutzers beinhaltet.

10. Ladesäule (1), die zur Aufladung von Elektrofahrzeugen geeignet und dafür vorgesehen ist, umfassend
- eine erste Sensorvorrichtung (81)
- eine Lüftervorrichtung (40),
- einen Tank (20) für einen flüssigen und/oder gasförmigen Energieträger
- eine Steuereinheit (30)
**dadurch gekennzeichnet, dass**
die erste Sensorvorrichtung (81) dafür vorgesehen und dafür geeignet ist, einen Initialvorgang für die Befüllung des Tanks (20) der Ladesäule (1) zu erkennen.

11. Ladesäule (1) zur Aufladung von Elektrofahrzeugen nach Anspruch 10
**dadurch gekennzeichnet, dass**
die Lüftervorrichtung (40) derart angeordnet ist, dass durch den Betrieb der Lüftervorrichtung (40) der Tank (20) kühlbar ist.

12. Ladesäule (1) zur Aufladung von Elektrofahrzeugen nach einem oder mehreren der Ansprüche 10 und 11
**dadurch gekennzeichnet, dass**
die Ladesäule (1) eine zweite Sensorvorrichtung (82) aufweist,
wobei die zweite Sensorvorrichtung (82) dafür vorgesehen und dafür geeignet ist, einen Betankungsvorgang der Ladesäule (1) zu erkennen.

13. Ladesäule (1) zur Aufladung von Elektrofahrzeugen nach einem oder mehreren der Ansprüche 10 bis 12
**dadurch gekennzeichnet, dass**
die Ladesäule (1) eine Energiekonversionsvorrichtung (10) aufweist.

14. Ladesäule (1) zur Aufladung von Elektrofahrzeugen nach Anspruch 13
**dadurch gekennzeichnet, dass**
die Ladesäule (1) eine Vorrichtung (91) zur Unterbrechung des Betriebs der Energiekonversionsvorrichtung (10) aufweist,
wobei die Vorrichtung (91) zur Unterbrechung des Betriebs der Energiekonversionsvorrichtung (10) mit der gleichen Steuereinheit (30) gekoppelt ist, wie die erste (81) und/oder die zweite (82) Sensorvorrichtung,
wobei die Ladesäule (1) eine Ladevorrichtung (70) aufweist.

15. Ladesäule (1) zur Aufladung von Elektrofahrzeugen nach einem oder mehreren der Ansprüche 10 bis 14
**dadurch gekennzeichnet, dass**
die Ladesäule (1) eine Vorrichtung (93) zur Unterbrechung des Betriebs der Ladevorrichtung (70) aufweist,
wobei die Vorrichtung (93) zur Unterbrechung des Betriebs der Ladevorrichtung (70) mit der gleichen Steuereinheit (30) gekoppelt ist, wie die erste (81) und/oder die zweite (82) Sensorvorrichtung,
wobei die Sensoreinheit (4) mit der Steuerungseinheit (9) in der Ladesäule (1) gekoppelt ist,
wobei die Sensoreinheit (4) geeignet ist, ein Fahrzeug (10) auf einem der Ladesäule (1) zugeordneten Ladestellplatz zu erkennen, und
wobei die Sensoreinheit (4) geeignet ist, die Entnahme und/oder den Anschluss eines Ladekabels (8) zu erkennen.

## Claims

1. A method for refuelling a charging station (1) with a liquid and/or gaseous energy carrier with the following process steps
- registering an initiation process for refueling the charging station (1)
- activating and/or operating a fan device (40) in the charging station (1),
- start filling the tank (20) of the charging station (1) with a liquid and/or gaseous energy carrier.

2. A method for refuelling a charging station (1) with a liquid and/or gaseous energy carrier using the method steps according to claim 1
**characterized by the fact that**
the fan device (40) is activated when a refuelling operation and/or a temperature above a predetermined temperature threshold is registered.

3. A method for refuelling a charging station (1) with a liquid and/or gaseous energy carrier having the method steps of claim 1 or 2
**characterized by the fact that**
an airflow is generated by the operation of a fan device (40), and
the fan device (40) generates the air flow from the inside of the charging station (1) to the outside through an outlet (42).

4. A method for refuelling a charging station (1) with a liquid and/or gaseous energy carrier using the process steps according to one or more of the preceding requirements
**characterized by the fact that**
after the registration of the initial process, an evaluation of the initial process is carried out,
whereby, after the evaluation of the initiation process, the mode of operation is changed,
where, after changing the mode of operation, the control unit (30) prevents the refuelling of the charging station (1) and charging of electric vehicles from being carried out in parallel,
and
where, after changing the operating mode, the control unit (30) prevents the refuelling of the charging station (1) and the energy conversion for the production of electrical energy from being carried out in parallel.

5. A method for refuelling a charging station (1) with a liquid and/or gaseous energy carrier using the process steps according to one or more of the preceding requirements
**characterized by the fact that**
after the registration of the initiation process for refuelling the charging station (1), a test process is started to test the operation of the fan device (40).

6. A method for refuelling a charging station (1) with a liquid and/or gaseous energy carrier having the method steps of claim 3
**characterized by the fact that**
the outside temperature is lower than the temperature of the air flow when leaving the charging station (1).

7. A method for refuelling a charging station (1) with a liquid and/or gaseous energy carrier using the process steps according to one or more of the preceding requirements
**characterized by the fact that**
the operation of the fan device (40) is started, provided that the fan device (40) is not yet in operation at the time of the initiation.

8. A method for refuelling a charging station (1) with a liquid and/or gaseous energy carrier having the method steps of claim 3
**characterized by the fact that**
the generation of the air flow is stopped after the refueling process is completed.

9. A method for refuelling a charging station (1) with a liquid and/or gaseous energy carrier using the process steps according to one or more of the preceding claims
**characterized by the fact that**
the initiation process involves receiving a sensor signal, entering a user and/or authenticating the user.

10. A charging station (1), which is suitable and intended for the charging of electric vehicles,
- a first sensor device (81)
- a fan device (40),
- a tank (20) for a liquid and/or gaseous energy carrier
- one control unit (30)
**characterized by the fact that**
the first sensor device (81) is intended and suitable for detecting an initial process for filling the tank (20) of the charging station (1).

11. A charging station (1) for charging electric vehicles according to claim 10
**characterized by the fact that**
the fan device (40) is arranged in such a way that the tank (20) can be cooled by the operation of the fan device (40).

12. A charging station (1) for charging electric vehicles according to one or more of claims 10 and 11
**characterized by the fact that**
the charging station (1) has a second sensor device (82),
wherein the second sensor device (82) is intended and suitable for detecting a refuelling process of the charging station (1).

13. A charging station (1) for charging electric vehicles after one or more of the requirements 10 to 12
**characterized by the fact that**
the charging station (1) has an energy conversion device (10).

14. A charging station (1) for charging electric vehicles according to claim 13
**characterized by the fact that**
the charging station (1) has a device (91) for interrupting the operation of the energy conversion device ( 10),
wherein the device (91) for interrupting the operation of the energy conversion device (10) is coupled to the same control unit (30) as the first (81) and/or the second (82) sensor device,
where the charging station (1) has a charging device (70).

15. A charging station (1) for charging electric vehicles according to one or more of the requirements 10 to 14
**characterized by the fact that**
the charging station (1) has a device (93) for interrupting the operation of the charging device (70),
wherein the device (93) for interrupting the operation of the loader (70) is coupled to the same control unit (30) as the first (81) and/or the second (82) sensor device,
wherein the sensor unit (4) is coupled with the control unit (9) in the charging station (1),
wherein the sensor unit (4) is suitable for detecting a vehicle (10) in a charging space assigned to the charging station (1), and
wherein the sensor unit (4) is suitable for detecting the removal and/or connection of a charging cable (8).

## Revendications

1. Une méthode de ravitaillement d'une station de recharge (1) avec un porteur d'énergie liquide et/ou gazeux selon les étapes suivantes
- enregistrement d'un processus d'initiation pour le ravitaillement de la station de recharge (1)
- activation et/ou fonctionnement d'un dispositif ventilateur (40) dans la station de recharge (1),
- commencez le remplissage du réservoir (20) de la station de recharge (1) avec un support d'énergie liquide et/ou gazeux.

2. Une méthode pour ravitailler une station de recharge (1) avec un porteur d'énergie liquide et/ou gazeux en utilisant les étapes de la méthode selon la revendication 1
**caractérisée par le fait que**
Le dispositif ventilateur (40) est activé lorsqu'une opération de ravitaillement et/ou une température supérieure à un seuil de température prédéterminé est enregistrée.

3. Une méthode de ravitaillement en carburant d'une station de recharge (1) avec un support d'énergie liquide et/ou gazeux ayant les étapes de méthode de la revendication 1 ou 2
**caractérisée par le fait que**
un flux d'air est généré par le fonctionnement d'un dispositif ventilateur (40), et
Le dispositif ventilateur (40) génère le flux d'air de l'intérieur de la station de charge (1) vers l'extérieur via une sortie (42).

4. Une méthode de ravitaillement d'une station de recharge (1) avec un porteur d'énergie liquide et/ou gazeux en utilisant les étapes du procédé selon une ou plusieurs des exigences précédentes
**caractérisée par le fait que**
Après l'enregistrement du processus initial, une évaluation du processus initial est effectuée,
par laquelle, après l'évaluation du processus d'initiation, le mode de fonctionnement est modifié,
où, après changement de mode de fonctionnement, l'unité de commande (30) empêche le ravitaillement de la station de recharge (1) et la recharge des véhicules électriques d'être effectués en parallèle, et
où, après changement de mode de fonctionnement, l'unité de contrôle (30) empêche le ravitaillement de la station de recharge (1) et la conversion d'énergie pour la production d'énergie électrique d'être effectuée en parallèle.

5. Une méthode de ravitaillement d'une station de recharge (1) avec un porteur d'énergie liquide et/ou gazeux en utilisant les étapes du procédé selon une ou plusieurs des exigences précédentes
**caractérisée par le fait que**
Après l'enregistrement du processus d'initiation du ravitaillement de la station de recharge (1), un processus de test est lancé pour tester le fonctionnement du dispositif ventilateur (40).

6. Une méthode de ravitaillement en carburant d'une station de recharge (1) avec un porteur d'énergie liquide et/ou gazeux ayant les étapes de la méthode de la revendication 3
**caractérisée par le fait que**
La température extérieure est inférieure à celle du flux d'air lors de la sortie de la station de recharge (1).

7. Une méthode de ravitaillement d'une station de recharge (1) avec un porteur d'énergie liquide et/ou gazeux en utilisant les étapes du procédé selon une ou plusieurs des exigences précédentes
**caractérisée par le fait que**
Le fonctionnement du dispositif ventilateur (40) est lancé, à condition que le dispositif ventilateur (40) ne soit pas encore en service au moment de l'initiation.

8. Une méthode de ravitaillement en carburant d'une station de recharge (1) avec un porteur d'énergie liquide et/ou gazeux ayant les étapes de la méthode de la revendication 3
**caractérisée par le fait que**
La génération du flux d'air est arrêtée après la fin du ravitaillement.

9. Une méthode de ravitaillement d'une station de recharge (1) avec un porteur d'énergie liquide et/ou gazeux en utilisant les étapes du procédé selon une ou plusieurs des exigences précédentes
**caractérisée par le fait que**
Le processus d'initiation consiste à recevoir un signal capteur, à entrer un utilisateur et/ou à l'authentifier.

10. Une station de recharge (1), adaptée et destinée à la recharge des véhicules électriques,
- un premier dispositif capteur (81)
- un dispositif ventilateur (40),
- un réservoir (20) pour un porteur d'énergie liquide et/ou gazeux
- une unité de contrôle (30)
**caractérisée par le fait que**
Le premier dispositif capteur (81) est conçu et adapté à la détection d'un processus initial de remplissage du réservoir (20) de la station de recharge (1).

11. Une station de recharge (1) pour la recharge des véhicules électriques selon la revendication 10
**caractérisée par le fait que**
Le dispositif ventilateur (40) est disposé de manière à ce que le réservoir (20) puisse être refroidi par le fonctionnement du dispositif ventilateur (40).

12. Une station de recharge (1) pour la recharge des véhicules électriques selon une ou plusieurs desrevendications 10 et 11
**caractérisée par le fait que**
la station de recharge (1) possède un second dispositif capteur (82),
où le second dispositif capteur (82) est destiné et adapté à détecter un processus de ravitaillement de la station de recharge (1).

13. Une station de recharge (1) pour la recharge des véhicules électriques après une ou plusieurs des exigences 10 à 12
**caractérisée par le fait que**
La station de recharge (1) est équipée d'un dispositif de conversion d'énergie (10).

14. Une station de recharge (1) pour la recharge des véhicules électriques selon la revendication 13
**caractérisée par le fait que**
la station de recharge (1) possède un dispositif (91) pour interrompre le fonctionnement du dispositif de conversion d'énergie (10),
où le dispositif (91) chargé d'interrompre le fonctionnement du dispositif de conversion d'énergie (10) est couplé à la même unité de contrôle (30) que le premier (81) et/ou le second (82) dispositif de capteur,
où la station de recharge (1) possède un dispositif de recharge (70).

15. Une station de recharge (1) pour la recharge des véhicules électriques selon une ou plusieurs des exigences 10 à 14
**caractérisée par le fait que**
la station de recharge (1) possède un dispositif (93) pour interrompre le fonctionnement du dispositif de charge (70),
où le dispositif (93) pour interrompre le fonctionnement du chargeur (70) est couplé à la même unité de contrôle (30) que le premier (81) et/ou le second (82) dispositif de capteur,
où l'unité captrice (4) est couplée à l'unité de commande (9) de la station de recharge (1), où l'unité captrice (4) convient à la détection d'un véhicule (10) dans un espace de recharge attribué à la station de recharge (1), et
où l'unité captrice (4) convient à détecter le retrait et/ou la connexion d'un câble de charge (8).
